# EUROPÄISCHE PATENTSCHRIFT

(11) **EP 2 574 505 B1**
(45) Veröffentlichungstag und Bekanntmachung des Hinweises auf die Patenterteilung: **08.04.2015**
(21) Anmeldenummer: 12466018.4
(22) Anmeldetag: 24.09.2012
(51) Int. Cl.: B60R 5/04, B60R 7/02

(54) **Ablagebox des Laderaums von Fahrzeugen**
Storage container for the cargo compartment of vehicles
Vide-poche de l'espace de chargement des véhicules

(30) Priorität: 30.09.2011 CZ 20110615
(43) Veröffentlichungstag der Anmeldung: 03.04.2013
(73) Patentinhaber: Skoda Auto a.s., 293 60 Mladá Boleslav (CZ)
(72) Erfinder: Polacek, Roman, 500 09 Hradec Kralové (CZ)

(56) Entgegenhaltungen:
- EP-A2- 1 332 919

## Beschreibung

### Technisches Gebiet

Die Erfindung betrifft eine Ablagebox unter der Rollobahn des Abdeckrollos des Fahrzeugladeraumes, insbesondere eines Kombi-Fahrzeuges, und dient zum Ablegen von Gegenständen für den Fahrgastbedarf.

### Bisheriger Stand der Technik

Für die Abdeckung des Laderaumes in Kombi-Fahrzeugen wird eine Rollobahn verwendet, die an einer Wickelwelle befestigt ist, welche in einem seitlich im Gepäckraum angeordneten Gehäuse gelagert ist. Solche Lösung ist z.B. aus dem Dokument DE4405280 bekannt, wo das Abdeckrollo ein längliches Gehäuse aufweist, in dem drehbar die Wickelwelle angeordnet ist. Auf dieser Welle ist die Rollobahn befestigt und aufgewickelt, die man um den Einblick in den Gepäckraum zu verhindern ausziehen und horizontal über dem Gepäckraum aufspannen kann. Die Oberfläche der Rollobahn kann auch als Ablageraum für leichtere Gegenstände wie z.B. Kleidungsstücke dienen, was in der Praxis relativ oft genutzt wird. Dies erscheint als ein Nachteil, da so abgelegter Gegenstand einem eventuellen Dieb den Anlass zum Eindringen in das Fahrzeug geben kann.

EP 1332919 A2 beschreibt ein Ablagebox des Laderaums von Fahrzeugen gemäß den Oberbegriff des Patenanspruchs 1.

### Darstellung der Erfindung

Die Aufgabe wird durch die für den Transport und Aufbewahrung von leichteren Gegenständen im Fahrzeug dienende Ablagebox im Fahrzeugladeraum gelöst. Die Ablagebox im Fahrzeugladeraum kann unter die Rollobahn des Abdeckrollos des Fahrzeugladeraumes, insbesondere eines Kombi-Fahrzeuges, in die Ausnehmungen für das Abdeckrollo angeordnet werden, die in beiden Seitenwänden des Laderaumes ausgebildet sind.

Die Darstellung der Erfindung liegt darin, dass die Ablagebox durch einen vorderen Träger, hinteren Träger und eine Ablageplane gebildet wird. Diese Plane ist an einem Ende länglich zum vorderen Träger und mit dem gegenüberliegenden Ende länglich zum hinteren Träger befestigt. Der vordere Träger weist an seinen beiden Enden ein vorderes Endstück und der hintere Träger an seinen beiden Enden ein hinteres Endstück auf. Das hintere Endstück des hinteren Trägers kann zerlegbar zum vorderen Endstück des vorderen Trägers befestigt werden. Das vordere Endstück umfasst einen Nutenstein, der als fester Bestandteil des vorderen Endstücks ausgebildet ist. Das hintere Endstück umfasst eine Backe, die als ein federnder Bestandteil des hinteren Endstücks ausgebildet ist. Der Nutenstein des vorderen Endstücks und die Backe des hinteren Endstücks sind für das genaue Einrasten und Halten des Nutensteins in der Backe ausgestaltet.

Das vordere Endstück umfasst weiter einen Stift, der für das Einstecken in die Aufnahme ausgestaltet ist, die im unteren Teil der Ausnehmungen in beiden Seitenwänden des Fahrzeugladeraumes für die Anordnung des Abdeckrollos ausgebildet sind.

Das hintere Endstück weist auch eine Höhlung für das Aufnehmen des ausgeklappten Hakens auf. Es handelt sich um einen üblichen Haken zur Aufhängung von Gegenständen, Taschen, Gepäckstücken, der an beiden Seitenwänden des Fahrzeugladeraumes angeordnet ist. Beide Haken sind parallel zueinander angeordnet, d.h. gegenüberliegend in gleicher Entfernung von der Aufnahme des vorderen Endstücks, und können ins Innere des Laderaumes aufgeklappt werden.

### Übersicht der Figuren der Zeichnungen

Die Fig. 1 stellt eine perspektivische Ansicht des Laderaumes mit der eingebauten Ablagebox in der Transportstellung vorbereitet zur Ladungsaufnahme dar;
die Fig. 2 stellt eine perspektivische Ansicht des Laderaumes mit der aufgerollten Ablagebox in der Parkposition dar, in der sie die Nutzung des vollen Volumens des Laderaumes nicht behindert;
die Fig. 3 stellt eine perspektivische Ansicht des Laderaumes mit der ausgerollten Ablagebox dar, die in einer Bereitschaftsposition zum schnellen Aufspannen in die Transportposition ist;
die Fig. 4 stellt eine perspektivische Ansicht des Einbaues der aufgerollten Ablagebox in die keilförmige Aufnahme im Bereich unter dem Abdeckrollo des Laderaumes dar;
die Fig. 5 stellt eine perspektivische Ansicht des Aufspannens der Ablagebox im Fahrzeug dar;
die Fig. 6 stellt die Draufsicht der linken Seite des Laderaumes mit eingebauter aufgespannter Ablagebox sowie die in Abbildungen 7 - 12 abgebildeten Schnitte A-A bis E-E dar;
die Fig. 7 stellt einen Längsschnitt der Seitenwand des Laderaumes im Bereich des auf dem Haken aufgesetzten hinteren Endstücks dar;
die Fig. 8 stellt einen Längschnitt in der Fahrzeugmitte mit der Ablagebox in Transportposition mit aufgespannter Plane dar;
die Fig. 9 stellt einen Längsschnitt in der Fahrzeugmitte mit aufgerollter Ablagebox dar;
die Fig. 10 stellt einen Längsschnitt der Seitenwand des Laderaumes im Bereich der Aufnahme des vorderen Endstücks in der Seitenverkleidung des Laderaumes dar; die Fig. 11 stellt einen Querschnitt des Laderaumes im Bereich des auf dem Haken aufgesetzten hinteren Endstücks in aufgespannter Position der Ablagebox dar;
die Fig. 12 stellt einen Längsschnitt der Seitenwand des Laderaumes in Detailansicht über dem vorderen und hinteren Endstück im zusammengefügten Stand sowie die Art der Trennung und Verbindung der Endstücke dar.

### Ausführungsbeispiel der Erfindung

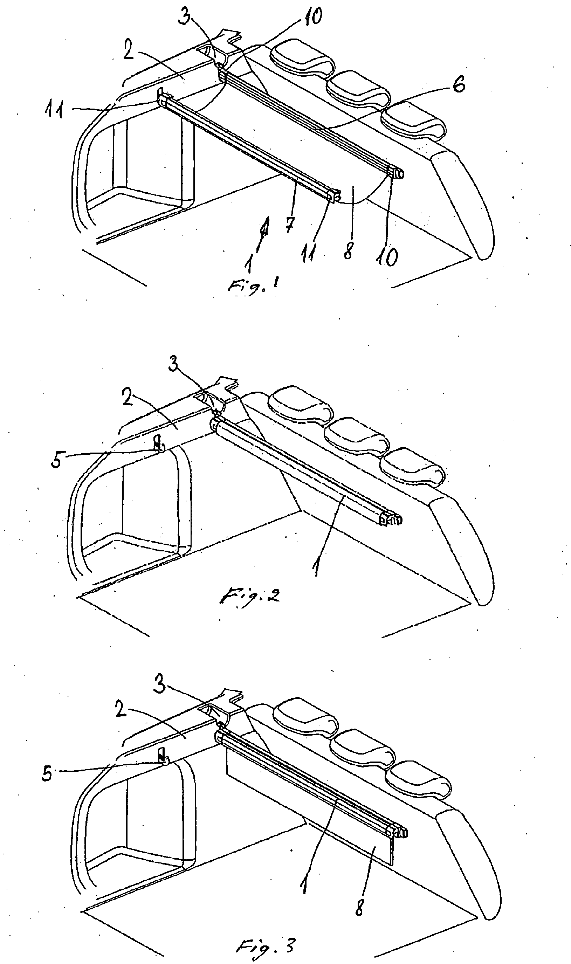

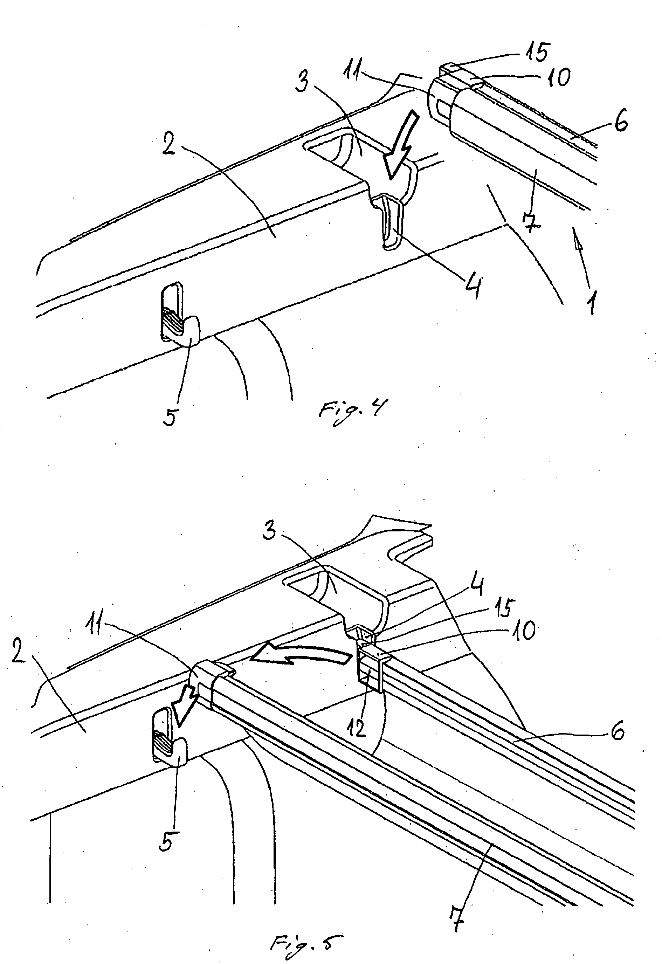

Die Ablagebox 1, nach Fig. 1, 2 und 3, ist unter der Rollobahn des Abdeckrollos im Fahrzeugraum in den Seitenwänden 2 des Laderaumes angeordnet. Vorteilhaft ist diese Lösung insbesondere bei Kombi-Fahrzeugen einsetzbar. Die Ablagebox 1 dient zum Ablegen von Kleidungsstücken oder anderer leichten Gegenstände für den Fahrgastbedarf. Die Ablagebox 1 ist in der Seitenwand 2 des Laderaumes so angeordnet, dass unter der Ausnehmung 3 für das Abdeckrollo in der Seitenwand 2, nach Fig. 4 und 5, eine Aufnahme 4 für das Einstecken der Ablagebox 1 ausgebildet ist.

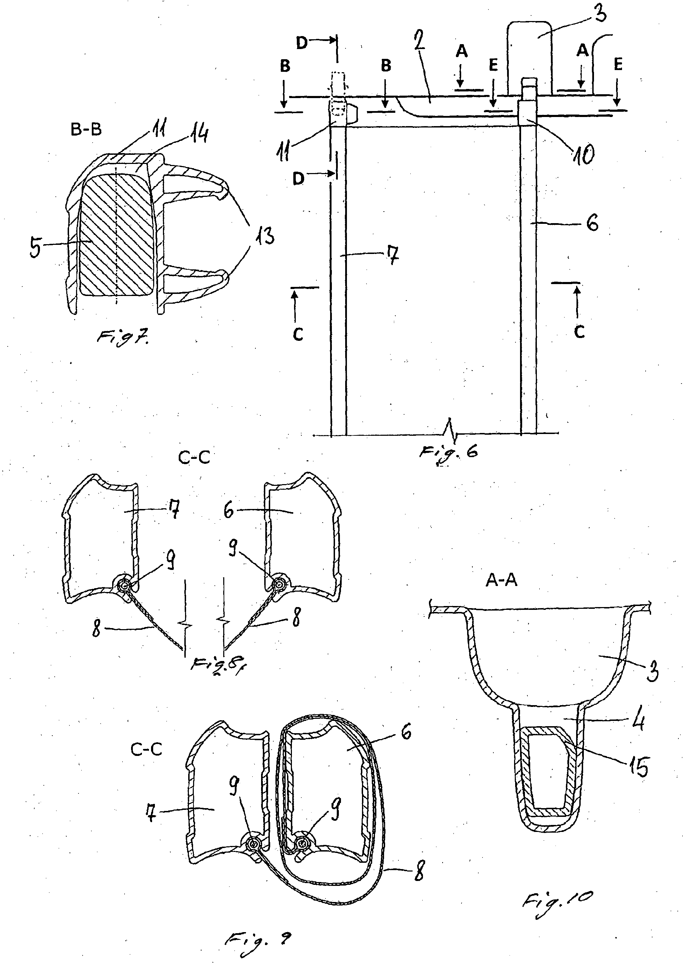

Die Ablagebox 1 wird gebildet durch den vorderen Träger 6, hinteren Träger 7 und die Ablageplane 8, die mit einem Ende länglich zum vorderen Träger 6 und mit dem gegenüberliegenden Ende länglich zum hinteren Träger 7 befestigt ist. Die Plane 8 wird über eine Welle 9 befestigt, die länglich in den Trägern 6 und 7 gelagert ist. Der vordere Träger 6 weist an jedem seinen beiden Enden ein befestigtes Endstück 10 und der hintere Träger 7 an seinen beiden Enden ein hinteres Endstück 11 auf, wobei das hintere Endstück 11 des hinteren Trägers 7 zerlegbar an das vordere Endstück 10 des vorderen Trägers 6 befestigbar ist, wie den Fig. 1 bis 3 zu entnehmen ist. In der Fig. 2 ist die Ablagebox 1 im aufgerollten Zustand in der Parkposition dargestellt, in der sie die Nutzung des vollen Volumens des Laderaumes nicht behindert. Diese Position der Ablagebox 1, d.h. wenn die Ablageplane 8 aufgerollt ist, stellt detailliert die Fig. 9 dar. In Fig. 1 ist die Ablagebox 1 im aufgespannten Zustand in der Transportposition vorbereitet zur Ladungsaufnahme, d.h. wenn das hintere Endstück 11 vom vorderen Endstück 10 getrennt und der hintere Träger 7 auf den Haken 5 aufgesetzt ist. Als Haken 5 wird hier der handelsübliche klappbare Haken für die Aufhängung von Gegenständen, Taschen und Gepäckstücke usw. genutzt. In Fig. 3 ist die Ablagebox 1 im zusammengefügten Zustand in der Bereitschafisstellung, d.h. ähnlich wie in der Position nach Fig. 1 mit dem Unterschied, dass die Ablageplane 8 im ausgerollten Zustand für schnelles Aufspannen in die Transportposition nach Fig. 2 ist.

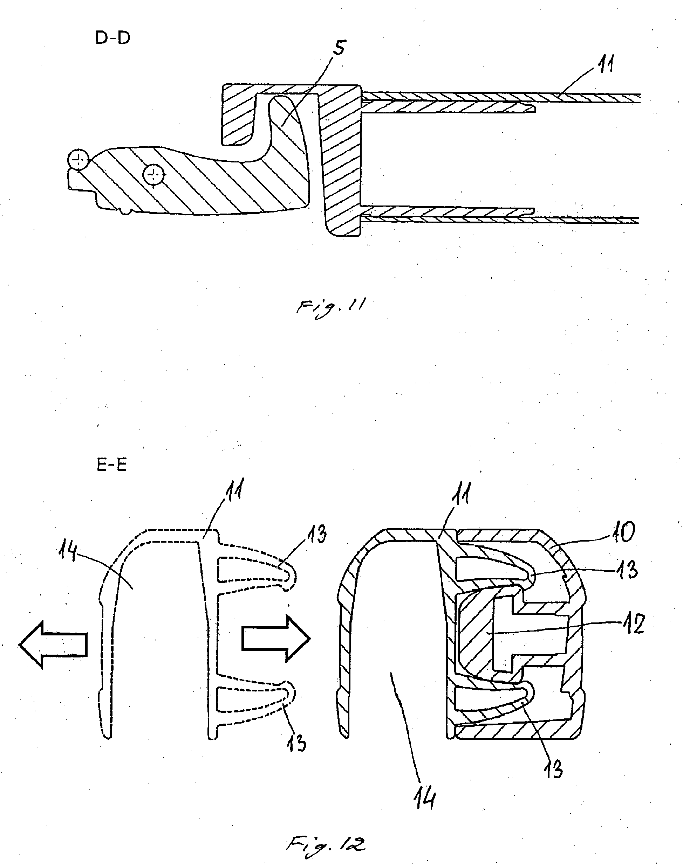

Die zerlegbare Verbindung des hinteren Endstücks 11 mit dem vorderen Endstück 10 ist so ausgeführt, dass das vordere Endstück 10 einen Nutenstein 12 aufweist, der als fester Bestandteil des vorderen Endstücks 10 ausgebildet ist und das hintere Endstück 11 eine Backe 13 aufweist, die als ein federnder Teil des hinteren Endstücks 11 ausgebildet ist. Der Nutenstein 12 des vorderen Endstücks 10 und die Backe 13 des hinteren Endstücks 11 sind so ausgebildet, dass der Nutenstein 12 genau in die Backe 13 eingreift und durch diese gehalten wird, wie der Fig. 12 zu entnehmen ist.

Das vordere Endstück 10 des vorderen Trägers 6 der Ablagebox 1, nach Fig. 4, 5 und 10, weist einen Stift 15 auf, der für das Einstecken in die Aufnahme 4 ausgestaltet ist. Die Aufnahme 4 ist in dem unteren Teil der Ausnehmung 3 für das Abdeckrollo in der Seitenwand 2 an beiden Seiten des Fahrzeugladeraumes ausgebildet.

Das hintere Endstück 11 des hinteren Trägers 7 der Ablagebox 1, nach Fig. 7, 11, 12, weist eine Höhlung 14 auf, die für das Eingreifen des aufgeklappten Hakens 5 in die Höhlung 14 und dadurch das Halten des hinteren Trägers 7 in der aufgespannter Position der Ablagebox 1 ausgestaltet ist.

Der eigentliche Einbau der Ablagebox 1 in das Fahrzeug erfolgt so, dass zuerst das Abdeckrollo aus den an beiden Seiten des Fahrzeugladeraums angeordneten Ausnehmungen 3 an der Seitenwand 2 ausgenommen wird. In die Ausnehmungen 3 wird die Ablagebox 1 im aufgerollten Zustand eingesetzt und der Stift 15 des vorderen Endstücks 10 in die Aufnahme 4 eingesteckt, die im unteren Bereich der Ausnehmung 3 in der Seitenwand 2 an beiden Seiten des Fahrzeugkofferraums ausgebildet ist. Die Ablagebox 1 kann in die Aufnahme 4 mit ausgerollter Plane 8 oder mit der eingerollten Plane eingesetzt werden und das Ausrollen erfolgt dann nach der Trennung der einzelnen Träger 6, 7.

Das Handling erfolgt so, dass nach dem Aufwickeln der Rollobahn die Endstücke 10, 11 durch Ziehen des hinteren Trägers 7 getrennt werden, d.h. der Nutenstein 12 rückt aus der Backe 13 heraus. Nachfolgend nach dem Aufklappen des Hakens 5, der an beiden Seiten des Gepäckraumes angeordnet ist, und durch Vorschub des hinteren Trägers 7 ins Innere des Gepäckraums kann der Haken 5 in die Höhlung 14 des hinteren Endstücks 11 eingesteckt werden. So wird der hintere Träger 7 in der Nutzungsposition gehalten. Nachfolgend kann das Abdeckrollo wieder in die Ausnehmungen 3 in den Seitenwänden 2 des Fahrzeugladeraumes eingesetzt werden.

### Gewerbliche Anwendbarkeit

Die erfindungsgemäße Ablagebox kann in allen Automobilen eingesetzt werden, insbesondere dann bei Personenkraftfahrzeugen des Kombi-Typs, und vorteilhaft beispielsweise an den Seitenwänden des Fahrzeugladeraumes angeordnet und unter der Rollobahn des Abdeckrollos des Fahrzeugladeraumes aufgespannt werden.

### Verwendete Bezeichnungen

- 1: Ablagebox im Fahrzeugladeraum
- 2: Seitenwand des Fahrzeugladeraumes
- 3: Ausnehmung für das Abdeckrollo in der Seitenwand des Laderaumes
- 4: Aufnahme in der Seitenwand des Laderaumes
- 5: Haken in der Seitenwand des Laderaumes
- 6: vorderer Träger der Ablagebox
- 7: hinterer Träger der Ablagebox
- 8: Ablageplane der Ablagebox
- 9: Wickelwelle der Ablagebox
- 10: vorderes Endstück des vorderen Trägers
- 11: hinteres Endstück des hinteren Trägers
- 12: Nutenstein des vorderen Endstücks
- 13: Backe des hinteren Endstücks
- 14: Höhlung des hinteren Endstücks
- 15: Stift des vorderen Endstücks

## Patentansprüche

1. Ablagebox (1) des Laderaums von Fahrzeugen, die unter die Rollobahn des Abdeckrollos des Fahrzeugladeraumes, insbesondere eines Kombi-Fahrzeuges, in die Ausnehmungen (3) für das Abdeckrollo in den beiden Seitenwänden (2) des Laderaumes angeordnet werden kann und zum Ablegen von Gegenständen für den Fahrgastbedarf dient, wobei diese Ablagebox (1) gebildet wird durch
einen vorderen Träger (6), der an seinen beiden Enden ein vorderes Endstück (10) aufweist,
einen hinteren Träger (7), der an seinen beiden Enden ein hinteres Endstück (11) aufweist,
eine Ablageplane (8), die mit einem Ende länglich zum vorderen Träger (6) und mit dem gegenüberliegenden Ende länglich zum hinteren Träger (7) befestigt ist,
wobei das hintere Endstück (11) des hinteren Trägers (7) zerlegbar zum vorderen Endstück (10) des vorderen Trägers (6) befestigt werden kann, **dadurch gekennzeichnet, das**s das vordere Endstück (10) zumindest einen Nutenstein (12) aufweist, der als fester Bestandteil des vorderen Endstücks (10) ausgebildet ist und das hintere Endstück (11) zumindest eine Backe (13) aufweist, die als ein federnder Bestandteil des hinteren Endstücks (11) ausgebildet ist, wobei der Nutenstein (12) des vorderen Endstücks (10) und die Backe (13) des hinteren Endstücks (11) für das genaue Einrasten und Halten des Nutensteins (12) in der Backe (13) ausgestaltet sind..

2. Ablagebox (1) nach Anspruch 1 **dadurch gekennzeichnet, dass** das hintere Endstück (11) eine Höhlung (14) aufweist, die für das Aufnehmen des aufgeklappten Hakens (5) in dieser Höhlung (14) ausgebildet ist.

## Claims

1. Storage container (1) for the loading space of vehicles, which storage container can be arranged below the roller blind web of the covering roller blind of the vehicle loading space, in particular of an estate car, in the recesses (3) for the covering roller blind in the two side walls (2) of the loading space and serves for depositing articles needed by the passengers, wherein this storage container (1) is formed by
a front support (6) which has a front end piece (10) at its two ends,
a rear support (7) which has a rear end piece (11) at its two ends,
a storage sheet (8) which is fastened longitudinally by one end to the front support (6) and longitudinally by the opposite end to the rear support (7),
wherein the rear end piece (11) of the rear support (7) can be fastened separably to the front end piece (10) of the front support (6), **characterized in that** the front end piece (10) has at least one groove block (12) which is formed as a fixed component of the front end piece (10) and the rear end piece (11) has at least one jaw (13) which is formed as a resilient component of the rear end piece (11), wherein the groove block (12) of the front end piece (10) and the jaw (13) of the rear end piece (11) are configured such that the groove block (12) can be precisely latched and held in the jaw (13).

2. Storage container (1) according to Claim 1, **characterized in that** the rear end piece (11) has a cavity (14) which is designed for receiving the swung-up hook (5) in this cavity (14).

## Revendications

1. Boîte de rangement (1) de l'espace de chargement de véhicules, qui peut être disposée sous la bande de store du store de recouvrement de l'espace de chargement d'un véhicule, en particulier d'un break, dans les évidements (3) pour le store de recouvrement dans les deux parois latérales (2) de l'espace de chargement, et qui sert à déposer des objets pour les besoins des passagers, cette boîte de rangement (1) étant formée par
un support avant (6) qui comporte à ses deux extrémités une pièce d'extrémité avant (10),
un support arrière (7) qui comprend à ses deux extrémités une pièce d'extrémité arrière (11),
une bâche de boîte de rangement (8) qui est fixée, par une extrémité, longitudinalement par rapport au support avant (6) et, par l'extrémité opposée, longitudinalement par rapport au support arrière (7),
la pièce d'extrémité arrière (11) du support arrière (7) pouvant être fixée de manière démontable par rapport à la pièce d'extrémité avant (10) du support avant (6), **caractérisée en ce que** la pièce d'extrémité avant (10) comprend au moins un coulisseau (12) qui est réalisé en tant qu'élément constitutif fixe de la pièce d'extrémité avant (10) et la pièce d'extrémité arrière (11) comprend au moins une mâchoire (13) qui est réalisée en tant qu'élément constitutif élastique de la pièce d'extrémité arrière (11), le coulisseau (12) de la pièce d'extrémité avant (10) et la mâchoire (13) de la pièce d'extrémité arrière (11) étant configurés pour l'encliquetage et le maintien précis du coulisseau (12) dans la mâchoire (13).

2. Boîte de rangement (1) selon la revendication 1, **caractérisée en ce que** la pièce d'extrémité arrière (11) comprend une cavité (14) qui est réalisée pour la réception du crochet replié (5) dans cette cavité (14).
